(19) **Europäisches Patentamt / European Patent Office / Office européen des brevets**

(11) **EP 3 898 268 B1**

(12) **FASCICULE DE BREVET EUROPEEN**

(45) Date de publication et mention de la délivrance du brevet:
**09.07.2025 Bulletin 2025/28**

(21) Numéro de dépôt: **19850761.8**

(22) Date de dépôt: **18.12.2019**

(51) Classification Internationale des Brevets (IPC):
**B60C 1/00** *(2006.01)*    **C08L 9/00** *(2006.01)*

(52) Classification Coopérative des Brevets (CPC):
(C-Sets disponibles)
**B60C 1/0025; C08L 9/00**    (Cont.)

(86) Numéro de dépôt international:
**PCT/FR2019/053157**

(87) Numéro de publication internationale:
**WO 2020/128332 (25.06.2020 Gazette 2020/26)**

(54) **PNEUMATIQUE POURVU D'UN FLANC EXTERNE DONT LA COMPOSITION COMPREND UN ÉLASTOMÈRE THERMOPLASTIQUE ET UNE RÉSINE HYDROCARBONÉE**

REIFEN MIT EINER ÄUSSEREN SEITENWAND AUS EINER ZUSAMMENSETZUNG MIT EINEM THERMOPLASTISCHEN ELASTOMER UND EINEM KOHLENWASSERSTOFFHARZ

TYRE PROVIDED WITH AN OUTER SIDEWALL, THE COMPOSITION OF WHICH CONTAINS A THERMOPLASTIC ELASTOMER AND A HYDROCARBON RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873945**
**31.01.2019 FR 1900921**

(43) Date de publication de la demande:
**27.10.2021 Bulletin 2021/43**

(73) Titulaire: **COMPAGNIE GENERALE DES ETABLISSEMENTS MICHELIN**
**63000 Clermont-Ferrand (FR)**

(72) Inventeurs:
• **CHOUVEL, Christophe**
**63040 CLERMONT-FERRAND Cedex 9 (FR)**
• **GONZALEZ, David**
**63040 CLERMONT-FERRAND Cedex 9 (FR)**
• **HELLOT, Fabien**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2015/113966      WO-A1-2016/001094**
**WO-A1-2018/100079**

**(Cont. page suivante)**

EP 3 898 268 B1

(52) Classification Coopérative des Brevets (CPC):
(Cont.)

C-Sets
**C08L 9/00, C08L 9/06, C08L 57/02, C08L 91/00,
C08L 91/06, C08K 3/04, C08K 5/18, C08K 5/09,
C08K 3/22, C08K 3/06, C08K 5/47**

(52) Classification Coopérative des Brevets (CPC):
(Cont.)

**Description**

La présente invention est relative aux bandages pneumatiques et plus particulièrement aux flancs externes de pneumatiques, c'est-à-dire, par définition, aux couches élastomériques situées radialement à l'extérieur du pneumatique, qui sont en contact avec l'air ambiant.

En effet, il est possible de définir au sein du pneumatique trois types de zones :

- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.

- La zone radialement intérieure et en contact avec le gaz de gonflage, cette zone étant généralement constituée par la couche étanche aux gaz de gonflage, parfois appelée gomme intérieure (« inner liner » en anglais).

- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

Comme l'illustrent de nombreux documents parmi lesquels on peut citer les documents EP 1 097 966, EP 1462 479 B1, EP 1 975 200 A1, EP 1 033 265 B1, EP 1 357 149 A2, EP 1 231 080 A1 et US 4,824,900, les compositions traditionnellement utilisées pour des flancs sont à base de caoutchouc naturel et de caoutchouc synthétique comme le polybutadiène, et de noir de carbone.

Pour les manufacturiers de pneumatiques, la composition d'un flanc de pneumatique doit présenter de nombreuses caractéristiques parfois difficiles à concilier, et notamment une bonne résistance aux agressions externes comme les chocs, les déchirures et autres perforations. Le document WO2018/100079 propose une solution consistant à utiliser en flanc de pneumatique, une composition de caoutchouc comprenant un coupage d'élastomère diénique et d'élastomère thermoplastique.

Il est également important pour les flancs de pneumatique de présenter une bonne résistance aux attaques de l'ozone. Une solution connue est d'ajouter dans la composition une cire anti-ozone. Il reste cependant toujours intéressant de trouver des solutions pour améliorer la résistance aux attaques de l'ozone dans les flancs de pneumatiques.

Dans ce contexte, une solution apportée par les demanderesses, et permettant d'obtenir des pneumatiques qui présentent des propriétés améliorées de rigidité, d'hystérèse et de résistance aux attaques de l'ozone, consiste à utiliser de nouvelles compositions de flancs comme explicité ci-après.

L'invention proposée à présent a pour objet un pneumatique pourvu d'un flanc externe, ledit flanc externe comprenant une composition à base d'au moins un élastomère thermoplastique comprenant au moins un bloc élastomère et au moins un bloc thermoplastique, un élastomère butadiénique, 10 à 100 pce de noir de carbone, 5 à 25 pce de résine hydrocarbonée majoritairement composée d'unités issues de monomères C5, et un système de réticulation.

L'invention concerne plus particulièrement les bandages pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » c'est-à-dire métro, bus, engins de transport routier (camions, tracteurs, remorques), véhicules hors-la-route tels qu'engins agricoles ou de génie civil, et autres véhicules de transport ou de manutention.

L'invention ainsi que ses avantages seront aisément compris à la lumière de la description et des exemples de réalisation qui suivent, ainsi que de la figure unique relative à ces exemples qui schématise, en coupe radiale, un bandage pneumatique conforme à l'invention.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en œuvre pour l'invention peuvent être différentes à l'état non réticulé et à l'état réticulé.

Par ailleurs, le terme « pce », bien connu de l'homme du métier, signifie au sens de la présente demande de brevet, partie en poids pour cent parties d'élastomères ; c'est-à-dire du poids total du ou des élastomères, quels qu'ils soient, ceci incluant donc les élastomères thermoplastiques et les élastomères diéniques notamment.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type.

Lorsqu'on fait référence à une unité (ou monomère) « majoritaire » au sein d'un même composé (ou polymère), on entend au sens de la présente invention, que cette unité (ou monomère) est majoritaire parmi les unités (ou monomères) formant le composé (ou polymère), c'est-à-dire que c'est celle qui représente la plus grande fraction, en masse parmi les unités (ou monomères) formant le composé (ou polymère). Ainsi, par exemple, une résine majoritairement composée d'unités issues de monomères en C5 est une résine dans laquelle les unités en C5 représentent la plus grande quantité en masse, parmi toutes les unités composant ladite résine. Dit autrement, un monomère « majoritaire » ou un ensemble de monomères « majoritaires », est un monomère (ou un ensemble de monomères) qui représente la fraction massique la plus grande dans le polymère. Au contraire, un monomère « minoritaire » est un monomère qui ne représente pas la fraction molaire la plus grande dans le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Composition élastomère de flanc externe

Le pneumatique selon l'invention a pour caractéristique essentielle d'être pourvu d'un flanc externe, ledit flanc externe comprenant une composition à base d'au moins un élastomère thermoplastique comprenant au moins un bloc élastomère et au moins un bloc thermoplastique, un élastomère butadiénique, 10 à 100 pce de noir de carbone, 5 à 25 pce de résine hydrocarbonée majoritairement composée d'unités issues de monomères C5, et un système de réticulation.

Elastomères

De façon usuelle, on utilise indifféremment dans le texte les termes « élastomère » et « caoutchouc » qui sont interchangeables. La composition du flanc du pneumatique de l'invention est à base d'au moins un élastomère thermoplastique comprenant au moins un bloc élastomère et au moins un bloc thermoplastique, et au moins un élastomère butadiénique.

Par élastomère thermoplastique (TPE), on entend, de manière connue, un polymère de structure intermédiaire entre un polymère thermoplastique et un élastomère.

Un élastomère thermoplastique est constitué d'un ou plusieurs segments rigides « thermoplastiques » reliés à un ou plusieurs segments souples « élastomères ».

Ainsi, le ou les élastomères thermoplastiques de la composition du flanc externe utilisable selon l'invention comprennent au moins un bloc élastomère et au moins un bloc thermoplastique.

Ce type d'élastomères est bien connu de l'homme du métier et par exemple, est décrit dans le document WO2018/100079 pour son utilisation en flanc de pneumatique.

Ainsi, une composition dans laquelle une résine ou un polymère thermoplastique et un élastomère sont mélangés ne constitue pas un élastomère thermoplastique au sens de la présente invention.

Les blocs élastomères des élastomères thermoplastiques utilisables selon l'invention, peuvent être tous les élastomères connus de l'homme de l'art. On distingue généralement les blocs élastomères saturés des blocs élastomères insaturés.

Par bloc élastomère saturé, on entend que ce bloc comprend essentiellement des motifs ne comprenant pas d'insaturations éthyléniques (c'est-à-dire des doubles liaisons carbone-carbone), c'est à dire que les motifs comprenant des insaturations éthyléniques représentent moins de 15 % en moles par rapport à l'ensemble des motifs du bloc considéré. Les blocs élastomères saturés sont généralement constitués par la polymérisation de monomères éthyléniques. On peut citer en particulier les blocs polyalkylène tels que les copolymères statistiques éthylène-propylène ou éthylène-butylène. Ces blocs élastomères saturés peuvent aussi être obtenus par hydrogénation de blocs élastomères insaturés.

Par bloc élastomère insaturé, on entend que ce bloc est issu au moins en partie de monomères diènes conjugués, ayant un taux de motifs ou unités d'origine diénique (diènes conjugués) qui est supérieur à 15 % en moles.

Quand les blocs élastomères des élastomères thermoplastiques utilisables selon l'invention sont insaturés, ils sont préférentiellement choisis parmi :

a) Tout homopolymère obtenu par polymérisation d'un monomère diène conjugué ayant de 4 à 12 atomes de carbone ;

b) tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment l'isoprène, le butadiène-1,3, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, le 1-vinyl-1,3-cyclohexadiène, et un mélange de ces diènes conjugués ; de préférence, ces diènes conjugués sont choisis parmi l'isoprène, le butadiène et un mélange contenant de l'isoprène et/ou du butadiène.

Selon une variante, les monomères polymérisés pour former un bloc élastomère insaturé peuvent être copolymérisés, de manière statistique, avec au moins un autre monomère de manière à former un bloc élastomère insaturé. Selon cette variante, la fraction molaire en monomère polymérisé autre qu'un monomère diénique, par rapport au nombre total de motifs du bloc élastomère insaturé, doit être telle que ce bloc garde ses propriétés d'élastomère insaturé. Avantageusement la fraction molaire de cet autre co-monomère peut aller de 0 à 50 %, plus préférentiellement de 0 à 45 % et encore plus préférentiellement de 0 à 40 %.

A titre d'illustration, cet autre monomère susceptible de copolymériser avec le monomère premier peut être choisi parmi les monomères éthyléniques tels que l'éthylène, le propylène, le butylène, les monomères de type vinylaromatiques ayant de 8 à 20 atomes de carbone tels que définis ci-après ou encore, il peut s'agir d'un monomère tel que l'acétate de vinyle.

A titre de composés vinylaromatiques conviennent notamment les monomères styréniques, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Ainsi, selon un mode de réalisation préférentiel, le au moins un bloc élastomère peut être un copolymère statistique de type styrène-butadiène (SBR), ce copolymère pouvant être partiellement hydrogéné. Ce bloc SBR possède de préférence une Tg (température de transition vitreuse) mesurée par DSC selon la norme ASTM D3418 de 1999, inférieure à - 50°C. De manière bien connue, le bloc SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée. De manière préférentielle, on utilise notamment un bloc SBR ayant une teneur en styrène comprise, par exemple dans un domaine allant de 10 % à 60 % en poids, de préférence de 20 % à 50 % en poids, et pour la partie butadiénique, une teneur en liaisons -1,2 comprise dans un domaine allant de 4 % à 75 % (% molaire), et une teneur en liaisons -1,4 comprise dans un domaine allant de 20 % et 96 % (% molaire).

La détermination du taux d'hydrogénation est réalisée par une analyse RMN. Les spectres sont acquis sur un spectromètre Avance 500 MHz BRUKER équipé d'une Cryosonde 1H-X 5 mm. L'expérience RMN 1H quantitative, utilise une séquence simple impulsion 30° et un délai de répétition de 5 secondes entre chaque acquisition. 64 accumulations sont réalisées. Les échantillons (environ 25 mg) sont solubilisés dans le CS2 environ 1 mL, 100 μl de cyclohexane deutéré sont ajoutés pour faire le lock pendant l'acquisition. Les déplacements chimiques sont calibrés par rapport à l'impureté protonée du CS2 δppm 1H à 7,18 ppm référencé sur le TMS (δppm 1H à 0 ppm). Le spectre RMN 1H permet de quantifier la microstructure par intégration des massifs de signaux caractéristiques des différents motifs :

- Le styrène provenant du SBR et des blocs polystyrène. Il est quantifiable dans la zone des aromatiques entre 6,0 ppm et 7,3 ppm pour 5 protons (en retirant l'intégrale du signal de l'impureté du CS2 à 7,18 ppm).

- Le PB1-2 provenant du SBR. Il est quantifiable dans la zone des éthyléniques entre 4,6 ppm et 5,1 ppm pour 2 protons.

- Le PB1-4 provenant du SBR. Il est quantifiable dans la zone des éthyléniques entre 5,1 ppm et 6,1 ppm pour 2 protons et en supprimant 1 proton du motif PB1-2.

- Le PB1-2 hydrogéné provenant de l'hydrogénation et ne présentant que des protons aliphatiques. Les CH3 pendant du PB1-2 hydrogéné ont été identifiés et sont quantifiables dans la zone des aliphatiques entre 0,4 et 0,8 ppm pour 3 protons.

- Le PB1-4 hydrogéné provenant de l'hydrogénation et ne présentant que des protons aliphatiques. Il sera déduit par soustraction des protons aliphatiques des différents motifs en le considérant pour 8 protons.

La quantification de la microstructure peut être réalisée en % molaire comme suit: %molaire d'un motif = Intégrale 1H d'un motif/ Σ(intégrales 1H de chaque motif). Par exemple pour un motif de styrène : %molaire du styrène = (Intégrale 1H du styrène) / (Intégrale 1H du styrène + Intégrale 1H du PB1-2 + Intégrale 1H du PB1-4 + Intégrale 1H du PB1-2 hydrogéné + Intégrale 1H du PB1-4 hydrogéné).

De préférence, dans les élastomères thermoplastiques utiles aux besoins de l'invention, le bloc élastomère SBR est hydrogéné de telle manière qu'une proportion allant de 10 à 50 % molaire des doubles liaisons dans la portion butadiène sont hydrogénées.

De préférence pour l'invention, les blocs élastomères des élastomères thermoplastiques présentent une masse moléculaire moyenne en nombre (« Mn ») allant de 25 000 g/mol à 350 000 g/mol, de préférence de 35 000 g/mol à 250 000 g/mol de manière à conférer aux élastomères thermoplastiques de bonnes propriétés élastomériques et une tenue mécanique suffisante et compatible avec l'utilisation en flanc externe de pneumatique.

De manière particulièrement préférée dans l'invention, le ou les blocs élastomères insaturés sont choisis dans le groupe constitué par les polyisoprènes, les polybutadiènes, les copolymères de styrène et de butadiène, et les mélanges de ces élastomères, ces élastomères étant non hydrogénés ou partiellement hydrogénés.

Comme expliqué précédemment, les élastomères thermoplastiques utilisables selon l'invention comprennent au moins un bloc thermoplastique.

Par bloc thermoplastique, on entend un bloc constitué de monomères polymérisés et ayant une température de transition vitreuse, ou une température de fusion dans le cas des polymères semi-cristallins, supérieure ou égale à 80°C, de préférence variant de 80°C à 250°C, plus préférentiellement variant de 80°C à 200°C, et en particulier variant de 80°C à 180°C.

En effet, dans le cas d'un polymère semi-cristallin, on peut observer une température de fusion supérieure à la température de transition vitreuse. Dans ce cas, on prend en compte pour la définition ci-dessus la température de fusion et non pas la température de transition vitreuse.

Le ou les blocs thermoplastiques peuvent être constitués à partir de monomères polymérisés de diverses natures.

En particulier, le ou les blocs thermoplastiques peuvent être choisis dans le groupe constitué par les polyoléfines (polyéthylène, polypropylène), les polyuréthanes, les polyamides, les polyesters, les polyacétals, les polyéthers (polyoxyde d'éthylène, polyphénylène éther), les polysulfures de phénylène, les polyfluorés (FEP, PFA, ETFE), les polystyrènes, les polycarbonates, les polysulfones, le polyméthylméthacrylate, le polyétherimide, les copolymères thermoplastiques tels que le copolymère acrylonitrile-butadiène-styrène (ABS), et les mélanges de ces polymères.

Le ou les blocs thermoplastiques peuvent préférentiellement être choisis parmi les polystyrènes et les polymères comprenant au moins un bloc polystyrène.

Concernant les polystyrènes, ceux-ci sont obtenus à partir de monomères styréniques.

Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans les élastomères thermoplastiques utilisables selon l'invention, est compris entre 5 % et 50 %, préférentiellement compris entre 10 % et 40 %.

La proportion des blocs thermoplastiques dans les élastomères thermoplastiques utilisables selon l'invention est déterminée d'une part par les propriétés de thermoplasticité que doivent présenter les élastomères thermoplastiques.

Le ou les blocs thermoplastiques sont préférentiellement présents dans des proportions suffisantes pour préserver le caractère thermoplastique des élastomères thermoplastiques utilisables selon l'invention. Le taux minimum de blocs thermoplastiques dans les élastomères thermoplastiques peut varier en fonction des conditions d'utilisation des élastomères thermoplastiques.

D'autre part, la capacité des élastomères thermoplastiques à se déformer lors de la préparation du pneu peut également contribuer à déterminer la proportion des blocs thermoplastiques dans les élastomères thermoplastiques utilisables selon l'invention.

De manière particulièrement préférée dans l'invention, le ou les blocs thermoplastiques sont choisis dans le groupe constitué par les polystyrènes, les polyesters, les polyamides, les polyuréthanes, et les mélanges de ces polymères.

De manière tout particulièrement préférée dans l'invention, le ou les blocs thermoplastiques sont choisis dans le groupe constitué par les polystyrènes, les polyesters, les polyamides, et les mélanges de ces polymères.

De manière préférée dans l'invention, le ou les élastomères thermoplastiques sont choisis dans le groupe constitué par les copolymères à blocs styrène/butadiène/styrène (SBS), styrène/isoprène/styrène (SIS), styrène/copolymère butadiène-styrène éventuellement partiellement hydrogéné/styrène (SOE), et les mélanges de ces copolymères.

Plus préférentiellement, le ou les élastomères thermoplastiques sont choisis dans le groupe constitué par les copolymères à blocs styrène/butadiène/styrène (SBS), styrène/copolymère butadiène-styrène éventuellement partiellement hydrogéné/styrène (SOE), et les mélanges de ces copolymères.

Selon une autre variante, le ou les élastomères thermoplastiques sont choisis dans le groupe constitué par les copolymères à blocs styrène/butadiène/styrène (SBS), styrène/isoprène/styrène (SIS), styrène/copolymère butadiène-styrène partiellement hydrogéné/styrène (SOE), et les mélanges de ces copolymères.

De manière particulièrement préférée, le ou les élastomères thermoplastiques sont choisis dans le groupe constitué par les copolymères à blocs styrène/butadiène/styrène (SBS), styrène/copolymère butadiène-styrène partiellement hydrogéné/styrène (SOE), et les mélanges de ces copolymères.

A titre d'exemples d'élastomères thermoplastiques commercialement disponibles et utilisables selon l'invention, on peut citer les élastomères de type SIS commercialisés par Kuraray, sous le nom « Hybrar 5125 », ou commercialisés par Kraton sous le nom de « D 1161 » ou encore les élastomères de type SBS linéaires commercialisés par Polimeri Europa sous la dénomination « Europrene SOL T 166 » ou SBS étoilés commercialisés par Kraton sous la dénomination « D1184 ». On peut également citer les élastomères commercialisés par la société Dexco Polymers sous la dénomination de « Vector » (par exemple « Vector 4114 », « Vector 8508 »).

De préférence, le taux d'élastomère thermoplastique comprenant au moins un bloc élastomère et au moins un bloc thermoplastique dans la composition est compris dans un domaine allant de 5 à 45 pce, plus préférentiellement de 10 à 40 pce, plus préférentiellement encore de 15 à 35 pce.

De préférence, le taux d'élastomère butadiénique dans la composition utilisable dans le flanc du pneumatique selon l'invention est compris dans un domaine allant de 55 à 95 pce, de préférence de 60 à 90 pce, plus préférentiellement encore de 65 à 85 pce.

Par élastomère butadiénique, on entend tous les élastomères majoritairement constitué de monomères butadiène. De préférence, l'élastomère butadiénique est choisi dans le groupe constitué par les polymères de butadiène, les copolymères de butadiène et leurs mélanges. Parmi les copolymères de butadiène, on peut citer ceux comprenant à titre de co-monomère, minoritaire, le styrène (SBR), l'isoprène (BIR) ou le styrène et l'isoprène (SBIR).

Conviennent tous les polybutadiènes et en particulier ceux ayant une teneur (% molaire) en unités -1,2 comprise entre 4% et 80% ou ceux ayant une teneur (% molaire) en cis-1,4 supérieure à 80%.

Conviennent également tous les copolymères de butadiène-styrène et en particulier ceux ayant une température de transition vitreuse, Tg, (mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%,

Conviennent également les copolymères de butadiène-isoprène ceux ayant une teneur en isoprène comprise entre 5% et 50% en poids et une Tg de - 40°C à - 80°C.

Dans le cas des copolymères de butadiène-styrène-isoprène conviennent au titre d'élastomère butadiénique notamment ceux ayant une teneur en butadiène supérieure à la teneur en styrène et en isoprène.

Plus préférentiellement, l'élastomère butadiénique est choisi dans le groupe constitué par le polybutadiène (BR), les copolymères butadiène-styrène (SBR) et leurs mélanges. De manière très préférée, l'élastomère butadiénique est du polybutadiène.

De manière préférée pour l'invention, les élastomères thermoplastiques et butadiéniques sont les seuls élastomères de la composition, ce qui signifie que la somme de leurs taux en pce, est de 100 pce.

Noir de carbone et charges

La composition du flanc externe du pneumatique de l'invention comprend de 10 à 100 pce de noir de carbone.

On peut utiliser tout type noir de carbone connu pour ses capacités à renforcer une composition de caoutchouc utilisable pour la fabrication de pneumatiques.

Comme noirs de carbone conviennent tous les noirs de carbone conventionnellement utilisés dans les pneumatiques (noirs dits de grade pneumatique). Par exemple, on citera plus particulièrement les noirs de carbone renforçants de grade ASTM N115, N134, N234, N326, N330, N339, N347, N375, ou encore, selon les applications visées, les noirs de séries plus élevées (par exemple N550, N660, N683, N772), voire même N990.

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

De préférence pour l'invention, on peut utiliser un noir de carbone de haute surface spécifique. On entend ici par surface spécifique la surface spécifique BET mesurée selon la norme ASTM D6556-09 [méthode multipoints (5points)-gaz : azote- domaine de pression relative P/P0 : 0.05 à 0.30].

Ainsi, pour les besoins de l'invention, dans la composition du flanc externe, 10 à 100 pce du noir de carbone, de préférence 10 à 45 pce présente une surface spécifique supérieure à $60m^2/g$, de préférence supérieure à $80m^2/g$. Plus préférentiellement, 10 à 100 pce du noir de carbone, de préférence 10 à 45 pce présente une surface spécifique supérieure à $90m^2/g$, de préférence supérieure à $110m^2/g$.

De préférence dans la composition du flanc externe du pneumatique de l'invention, la quantité totale de noir de carbone est comprise dans un domaine allant de 20 à 60 pce, de préférence de 25 à 55 pce.

De préférence pour l'invention, le noir de carbone est la seule charge renforçante dans la composition du flanc externe du pneumatique, de préférence la seule charge.

Alternativement et à titre complémentaire, la composition du flanc externe du pneumatique de l'invention peut comprendre une autre charge, éventuellement renforçante, de préférence à un taux total inférieur à 20 pce, plus préférentiellement inférieur à 15 pce.

A ce titre conviennent les charges organiques autres que le noir de carbone, les charges inorganiques renforçantes ou encore les charges non-renforçantes.

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Comme charges inorganiques renforçantes conviennent notamment des charges minérales du type siliceuse, en particulier de la silice (SiO2), ou du type alumineuse, en particulier de l'alumine (Al2O3). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Comme charge non-renforçante, on peut citer celles choisies dans le groupe constitué par le carbonate de calcium, le kaolin, la montmorillonite, le silicate d'aluminium, le silicate de magnésium et leurs mélanges.

Plastifiants - Résine et Huile

Résines

La composition du flanc externe du pneumatique de l'invention comprend de 5 à 25 pce de résine hydrocarbonée majoritairement composée d'unités issues de monomères C5.

En effet, les demanderesses ont trouvé qu'une telle quantité d'une telle résine permettait aux compositions de flanc de pneumatique de présenter un excellent équilibre des performances de résistance à l'ozone, de non-efflorescence ou absence d'efflorescence, de faible résistance au roulement et de processabilité du pneumatique.

A titre de monomères C5 on entend selon la présente invention et de manière conventionnelle pour l'homme du métier, les monomères issus de coupes pétrolières en C4 à C6. Conviennent par exemple les 1,3 pentadiènes, cis et trans, les pentènes, le cyclopentadiène, de cyclopentène,le pyperylene, l'isoprène etc.

La résine utile aux besoins de l'invention, majoritairement composée d'unités issues de monomères C5, peut comprendre, en plus de ces unités, et à titre minoritaire, des unités aliphatiques, ou aromatiques ou encore du type aliphatique/ aromatique c'est-à-dire à base de monomères aliphatiques et/ou aromatiques, autres que C5. A ce titre, la résine peut comprendre, à titre minoritaire, des unités issues de monomères C9.

Cette résine hydrocarbonée, est majoritairement composée d'unités issues de monomères C5, la résine présente un taux de proton aromatique inférieur à 20%, de préférence inférieur à 15%.

Selon un mode de réalisation préféré de l'invention, la résine hydrocarbonée utile aux besoins de l'invention présente un taux de proton aromatique inférieur à 5%, de préférence inférieur à 0,5%. Plus préférentiellement, la résine ne comprend pas de motif aromatique.

Selon un autre mode de réalisation préféré de l'invention, la résine hydrocarbonée utile aux besoins de l'invention présente un taux de proton aromatique compris dans un domaine allant de 7 à 15%, de préférence de 9 à 13%.

De préférence également, la résine hydrocarbonée utile aux besoins de l'invention présente un taux de proton éthylénique inférieur à 15%, de préférence inférieur à 7%, plus préférentiellement inférieur à 5%.

Selon un mode de réalisation préférentiel, la résine hydrocarbonée utile aux besoins de l'invention présente une température de transition vitreuse (Tg) comprise dans un domaine allant de 30°C à 80°C, de préférence de 40 à 60°C.

La résine hydrocarbonée utile aux besoins de l'invention présente une masse moléculaire moyenne Mn comprise dans un domaine allant de 500 g/mol à 3000g/mol et de préférence de 700 à 2000g/mol.

De préférence, la résine hydrocarbonée utile aux besoins de l'invention présente un indice de polymolécularité (Ip) compris dans un domaine allant de 1 à 4, de préférence de 1,5 à 3,5, plus préférentiellement de 1,7 à 3.

Dans le commerce, il existe de nombreuses résines hydrocarbonées disponibles. Ces résines peuvent présenter des caractéristiques, notamment de composition chimique, de Tg, de Mn, de taux de proton aromatique, éthylénique ou encore d'Ip qui diffèrent selon les fournisseurs.

La macrostructure (Mw, Mn, Ip et Mz) de la résine hydrocarbonée est déterminée par chromatographie d'exclusion stérique (SEC) sur la base des normes ISO 16014 (Determination of average molecular mass and molecular mass distribution of polymers using size exclusion chromatography), ASTM D5296 (Molecular Weight Averages and molecular weight distribution of polystyrene by High performance size exclusion chromatography), et DIN 55672 (chromatographie d'exclusion stérique).

Pour ces mesures, l'échantillon de résine est solubilisé dans du tetrahydrofurane non antioxydé jusqu'à une concentration de 1,5 g/l. La solution est filtrée avec un filtre téflon de porosité de 0,45 $\mu$m, en utilisant par exemple une seringue à usage unique montée d'un filtre. Un volume de 100 $\mu$l est injecté à travers un jeu de colonnes de chromatographie d'exclusion stérique. La phase mobile est éluée avec un débit de 1 ml/min. Les colonnes sont thermostatées dans un four à 35°C. La détection est assurée par un réfractomètre thermostaté à 35°C. La phase stationnaire des colonnes est à base d'un gel de polystyrène divinylbenzène à porosité maîtrisée. Les chaînes polymères sont séparées selon la taille qu'elles occupent quand elles sont solubilisées dans le solvant: plus elles occupent un volume important, moins les pores des colonnes leur sont accessibles et plus leur temps d'élution est faible.

Une courbe d'étalonnage de Moore reliant le logarithme de la masse molaire (logM) au temps d'élution (te) est préalablement réalisée avec des étalons polystyrène, et modélisée par un polynome d'ordre 3 : Log (masse molaire de polystyrène) = a + b te + c te2 + d te3.

Pour la courbe d'étalonnage on utilise des étalons de polystyrène à distributions moléculaires étroites (indice de polymolécularité, Ip, inférieur ou égal à 1,1). Le domaine de masses molaires de ces étalons s'étend de 160 à environ 70 000 g/mol. Ces étalons peuvent être rassemblés par « familles » de 4 ou 5 étalons ayant un incrément d'environ 0,55 en log de M entre chaque.

On peut utiliser des kits étalons certifiés (ISO 13885 et DIN 55672) comme par exemple les kits de vials de la société PSS (polymer standard service, référence PSS-pskitr1l-3), ainsi qu'un PS étalon supplémentaire de Mp = 162 g/mol (Interchim, référence 178952). Ces kits se présentent sous la forme de 3 vials contenant chacun une famille de polystyrène étalons dans des quantités adaptées :

- Vial noir : Mp = 1 220, 4 850, 15 500 et 67 500 g/mol.

- Vial bleu : Mp = 376, 3 470, 10 400, 46 000 g/mol.

- Vial jaune : Mp = 266, 1920, 7 200, 28 000 g/mol.

- PS162 : Mp = 162 g/mol

Les masses molaires moyennes en nombre (Mn), en masse (Mw), la Mz, et la polydispersité de la résine analysée sont calculées à partir de cette courbe d'étalonnage. C'est pourquoi, on parle de masses molaires relatives à un étalonnage polystyrène.

Pour le calcul des masses moyennes et de l'Ip, on définit sur le chromatogramme correspondant à l'injection de l'échantillon les bornes d'intégration de l'élution du produit. On « découpe » le signal réfractométrique défini entre les 2 bornes d'intégration toutes les secondes. On relève pour chacune des "découpes élémentaires", le temps d'élution ti et l'aire du signal du détecteur Ai.

On rappelle ici que : Ip = Mw/Mn avec Mw masse moléculaire moyenne en poids, et Mn masse moléculaire en nombre. On rappelle également que les masses Mw, Mn et Mz sont des masses moyennes calculées d'après les formules ci-dessous : dans lesquelles Ai est l'amplitude du signal du détecteur refractométrique correspondant à la masse Mi et au temps d'élution ti.

$$MZ = \frac{\sum Ai * Mi^2}{\sum Ai * Mi}$$

$$Mn = \frac{\sum Ai}{\sum \frac{Ai}{Mi}}$$

$$Mw = \frac{\sum Ai * Mi}{\sum Ai}$$

Le matériel utilisé pour la mesure de SEC est une chaîne de chromatographie en phase liquide par exemple la chaîne Alliance 2690 de WATERS comprenant une pompe, un dégazeur et un injecteur ; un réfractomètre différentiel (par exemple le réfractomètre 2410 de WATERS), un logiciel d'acquisition et de traitement des données, par exemple le logiciel EMPOWER de WATERS, un four à colonnes, par exemple le WATERS « columns Heater Module » et 4 colonnes montées en série dans l'ordre suivant :

Tableau 1

| Numéro | Marque | Domaine de masses molaires (g/mol) | Longueur (mm) | Diamètre interne (mm) | Taille des particules (μm) | Désignation commerciale | Références (à titre indicatif) |
|---|---|---|---|---|---|---|---|
| Colonnes 1 et 2 | Polymer Laboratories | 200 - 400000 | 300 | 7,5 | 5 | MIXED-D | PL1110-6504 |
| Colonnes 3 et 4 | Polymer Laboratories | 200 - 30000 | 300 | 7,5 | 3 | MIXED-E | PL1110-6300 |

Le taux de proton aromatique (%HA) et le taux de proton éthylénique (%HE) sont mesurés par RMN 1H. Cette détermination est réalisée par rapport à l'ensemble des signaux détectés. Ainsi, les résultats obtenus sont exprimés en % d'aire de pic.

Les échantillons sont solubilisés dans le chloroforme deutéré (CDCl3) à raison d'environ 10mg de résine dans environ 1mL de solvant. Les spectres sont acquis sur un spectromètre Avance 500 MHz Bruker équipé d'une sonde "large bande" BBO z-grad 5 mm Bruker. L'expérience RMN 1H utilise une séquence simple impulsion 30° et un délai de répétition de 5 secondes entre chaque acquisition. 64 accumulations sont réalisées à température ambiante. Les déplacements chimiques sont calibrés par rapport à l'impureté protonée du chloroforme deutéré ; δppm 1H à 7,20 ppm. Les signaux RMN 1H des protons aromatiques sont situés entre 8,5ppm et 6,2ppm. Les protons éthyléniques quant à eux engendrent des signaux entre 6,2ppm et 4,5ppm. Enfin, les signaux correspondant aux protons aliphatiques sont situés entre 4,5ppm et 0ppm. Les aires de chaque catégorie de protons sont rapportées à la somme de ces aires pour ainsi donner une répartition en % d'aire de chaque catégorie de protons.

La température de transition vitreuse (Tg) est mesurée selon la norme ASTM D3418.

Les résines C5 sont disponibles dans le commerce, par exemple vendues par la société Eastman sous la dénomination « Piccotac 1105 » ou « Impera R1507 », par la société Exxon sous la dénomination « Escorez 1102 », par la société Kolon sous la dénomination « Hikorez A1100 » ou encore par la société Cray Valley Total sous la dénomination « Wingtack98 ». Les résines C5-C9 sont disponibles dans le commerce, par exemple vendues par la société Exxon sous la dénomination ou « OPPERA373», par la société Eastman sous la dénomination « Piccotac 8090 », par la société Cray Valley Total sous la dénomination « Wingtack STS ».

De préférence dans la composition du flanc externe du pneumatique de l'invention, la quantité de résine hydrocarbonée est comprise dans un domaine allant de 7 à 25 pce, plus préférentiellement de 9 à 25 pce, ou alors de 8 à 20 pce plus préférentiellement de 9 à 20 pce et de manière très préférée de 9 à 18 pce.

De préférence pour l'invention, la composition du flanc externe du pneumatique de l'invention ne comprend pas d'autre résine que la résine C5 décrite ci-dessus.

Alternativement, la composition peut comprendre en complément une autre résine hydrocarbonée à un taux inférieur ou égal à 15 pce, de préférence inférieur ou égal à 10 pce.

A ce titre convient tout type de résine hydrocarbonée, parfois aussi appelé résine plastifiante ou résine thermoplastique.

On rappelle ici que la dénomination "résine" est réservée dans la présente demande, par définition connue de l'homme du métier, à un composé qui est solide à température ambiante (23°C), par opposition à un composé plastifiant liquide tel qu'une huile d'extension ou huile plastifiante. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

Les résines hydrocarbonées sont des polymères bien connus de l'homme du métier, essentiellement à base de carbone et hydrogène, utilisables en particulier comme agents plastifiants dans des matrices polymériques. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont par définition miscibles (i.e., compatibles) aux taux utilisés avec les compositions de polymères auxquelles elles sont destinées, de manière à agir comme de véritables agents diluants. Leur Tg est de préférence supérieure à 0°C, notamment supérieure à 20°C (le plus souvent comprise entre 30°C et 120°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, "softening point"), température à laquelle le produit, par exemple sous forme de poudre, s'agglutine. La température de ramollissement d'une résine hydrocarbonée est généralement supérieure d'environ 50 à 60°C à sa valeur de Tg.

A titres d'exemples de telles résines hydrocarbonées, on peut citer celles choisies dans le groupe constitué par les résines d'homopolymère ou copolymère terpène, les résines terpène phénol, les résines d'homopolymère ou copolymère de coupe C9, les résines d'homopolymère ou copolymère de vinylaromatique et les mélanges de ces résines.

Le terme "terpène" regroupe ici de manière connue les monomères alpha-pinène, béta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Toutes les résines ci-dessus sont bien connues de l'homme du métier et disponibles commercialement, par exemple vendues par la société DRT sous la dénomination "Dercolyte" pour ce qui concerne les résines polylimonène.

Huiles plastifiantes

De préférence pour l'invention, la composition du flanc externe du pneumatique de l'invention ne comprend pas d'huile plastifiante ou en comprend moins de 25 pce.

De préférence pour l'invention, la composition du flanc externe du pneumatique de l'invention ne comprend pas d'huile plastifiante.

Alternativement, la composition peut comprendre une huile plastifiante. Dans ce cas, la quantité d'huile plastifiante est préférentiellement comprise dans un domaine allant de plus de 0 à 25 pce, de préférence de 3 à 15 pce.

Toute huile plastifiante, parfois aussi appelée huile d'extension, qu'elle soit de nature aromatique ou de préférence non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés.

Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C18, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Cire anti-ozone

La composition du flanc externe du pneumatique de l'invention comprend, de façon optionnelle, de 0,2 à 10 pce de cire anti-ozone.

Lorsqu'une cire est utilisée, un avantage supplémentaire de l'invention est de diminuer le problème d'efflorescence (« blooming » en anglais), bien connu de l'homme du métier, et du à la migration des cires anti-ozone à la surface des compositions.

Les cires anti-ozone sont bien connues de l'homme de l'art. Ces cires antiozonantes filmogènes peuvent être par exemple des cires paraffiniques, des cires microcristallines ou des mélanges de cires paraffiniques et micro-cristallines. Elles sont constituées d'un mélange d'alcanes linéaires et d'alcanes non linéaires (iso-alcanes, cyclo-alcanes, alcanes ramifiés) issus du raffinage du pétrole ou de l'hydrogénation catalytique du monoxyde de carbone (Fisher Tropsch Process) comportant majoritairement des chaînes d'au moins 20 atomes de carbone.

Toutes les cires antiozonantes connues de l'homme du métier peuvent être utilisées, y compris les cires naturelles comme par exemple la cire de Candelilla ou la cire de Carnauba. Ces cires peuvent par ailleurs être utilisées en coupages.

On peut citer les cires commerciales « Varazon 4959 » ou « Varazon 6500 » ou encore « Varazon 6810 » de la société Sasol, « Ozoace 0355 » de la société Nippon Seiro, « Negozone 9343 » de la société H&R, « H3841 » de la société Yanggu Huatai.

De préférence, la cire anti-ozone contient de 50 % à 75 % d'alcanes linéaires comportant 30 atomes de carbone à 38 atomes de carbone rapporté à la quantité totale d'alcanes linéaires.

De préférence dans la composition du flanc externe du pneumatique de l'invention, la quantité de cire anti-ozone est comprise dans un domaine allant de 0,5 à 5 pce, plus préférentiellement de 0,5 à 3 pce. Plus préférentiellement, la quantité de cire anti-ozone est comprise dans un domaine allant de 0,7 à 3 pce, de préférence, de 1,2 à 2,8 pce.

Système de réticulation

Le système de réticulation peut être un système de vulcanisation, il est préférentiellement à base de soufre (ou donneur de soufre) et d'un accélérateur primaire de vulcanisation. A ce système de vulcanisation viennent optionnellement s'ajouter, divers accélérateurs secondaires ou activateurs de vulcanisation connus (préférentiellement pour 0,5 à 5,0 pce chacun) tels qu'oxyde de zinc, acide stéarique, dérivés guanidiques (en particulier diphénylguanidine), etc. Le soufre ou un donneur de soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à un flanc externe de pneumatique. Parmi les donneurs de soufre on peut citer par exemple les alkyl phénol disulfures (APDS) tel que par exemple le disulfure de para-tertiobutylphénol.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Additifs divers

La composition de flanc externe décrite précédemment peut comporter par ailleurs les divers additifs usuellement présents dans les flancs externes connus de l'homme du métier. On citera par exemple des agents de protection tels que antioxydants ou antiozonants, anti-UV, divers agents de mise en œuvre ou autres stabilisants, ou encore des promoteurs aptes à favoriser l'adhésion au reste de la structure de l'objet pneumatique.

Préparation du flanc externe de l'invention

Afin de préparer le flanc externe selon l'invention, on procède, de manière connue de l'homme de l'art, au mélange des élastomères avec les autres composants du flanc externe à savoir le noir de carbone, la résine C5, la cire, ainsi que le système de réticulation et les éventuels autres ingrédients. L'homme du métier saura adapter l'ordre d'incorporation des ingrédients (en une fois ou en plusieurs étapes successives), la température et le temps de mélangeage.

Ainsi par exemple, on procède pour les essais de la manière suivante : on introduit dans un mélangeur interne, rempli à environ 70% (plus ou moins 5%) et dont la température initiale de cuve est comprise entre 40°C et 80°C, successivement les élastomères, le noir de carbone, la résine C5, la cire ainsi que les éventuels autres ingrédients à l'exception du système de réticulation. On conduit alors un travail thermomécanique (phase non-productive) en une étape, qui dure au total environ 3 à 4 minutes, jusqu'à atteindre une température maximale de « tombée » de 150°C.

On récupère le mélange ainsi obtenu, on le refroidit puis on incorpore le système de réticulation, par exemple du soufre et un accélérateur sur un mélangeur externe (homo-finisseur) à 30°C, en mélangeant le tout (phase productive) pendant un temps approprié (par exemple entre 5 et 12 min).

Selon un autre mode de réalisation, tous les composants y compris le système de réticulation peuvent être introduits successivement dans le mélangeur interne tel que décrit ci-dessus. Dans ce cas le mélange doit se faire jusqu'à une température de « tombée » inférieure ou égale à 130°C, préférentiellement inférieure ou égale à 120°C et notamment inférieure ou égale à 110°C.

Dans certains modes de réalisation alternatifs, un ou plusieurs des élastomères (diénique et/ou thermoplastique) utilisés dans la composition peuvent être introduits sous forme de « masterbatch » ou prémélangés avec certains des composants de la composition.

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de flancs externes de pneumatique.

Utilisation du flanc externe dans un bandage pneumatique

Le flanc externe précédemment décrit est particulièrement bien adapté à une utilisation comme produit fini ou semi-fini, en caoutchouc, tout particulièrement dans un bandage pneumatique pour véhicule automobile tel qu'un véhicule de type deux roues, tourisme ou industriel.

On comprendra aisément que, selon les domaines d'application spécifiques, les dimensions et les pressions en jeu, le mode de mise en œuvre de l'invention peuvent varier, le flanc externe comporte alors plusieurs modes d'utilisation préférentiels.

EXEMPLES DE RÉALISATION DE L'INVENTION

Le flanc externe précédemment décrit est avantageusement utilisable dans les bandages pneumatiques de tous types de véhicules, en particulier véhicules tourisme ou véhicules industriels tels que les poids-lourd.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs externes 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Le bandage pneumatique conforme à l'invention peut utiliser par exemple pour la composition de son flanc externe tel que défini ci-dessus, une composition conforme à la présente invention.

Le pneumatique pourvu de son flanc externe tel que décrit ci-dessus est de préférence réalisé avant réticulation (ou cuisson). La réticulation est ensuite effectuée classiquement.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche ("skim") d'épaisseur adaptée, avant de recouvrir cette dernière avec le reste de la structure du bandage pneumatique, selon des techniques de fabrication bien connues de l'homme du métier.

Tests

Les propriétés des compositions élastomères et de certains de leurs constituants sont caractérisées comme indiqué ci-après.

La résistance à l'ozone des matériaux est mesurée selon la methode suivante : après cuisson, les éprouvettes B15 sont préparées. Les éprouvettes dites B15 sont issues d'une plaque MFTR (appelée Monsanto) dont les deux bourrelets situés aux extrémités servent au maintien de l'éprouvette. Les éprouvettes dites B15 ont les dimensions suivantes 78.5mm *15mm*1.5mm. Au bout de 240 heures d'exposition à une température de 38°C et à un taux d'ozone de 50pphm (parties pour cent millions), les éprouvettes sont mises sur un support en forme de trapèze, et l'extension maximale, au-delà de laquelle il y a une rupture de l'échantillon, est mesurée par pas de 10% d'élongation. Le résultat exploité est l'extension maximale que les échantillons ont supportée sans se rompre durant l'exposition à l'ozone. Plus cette extension est élevée et meilleure est la résistance du matériau. Mesure des propriétés dynamiques (après cuisson) Les propriétés dynamiques G* et G" sont mesurées sur un viscoanalyseur (Metravib V A4000), selon la norme ASTM D 5992 - 96. On enregistre la réponse d'un échantillon de composition vulcanisée (éprouvette cylindrique de 2 mm d'épaisseur et de 78,5 mm2 de section, soumis à une sollicitation sinusoïdale en cisaillement simple alterné, à la fréquence de 10Hz, à une température de 23°C et selon la norme ASTM D 1349 - 99. On effectue un balayage en amplitude de déformation crête à crête de 0,1 à 50% (cycle aller), puis de 50% à 1 % (cycle retour). Pour le cycle retour, on indique la valeur de G* à 20% de déformation, ainsi que la valeur de G" à 20% de déformation. Les résultats exploités sont le module complexe de cisaillement dynamique (G*), qui indique la rigidité et dont une valeur diminuée représente une meilleure performance de rigidité; et le module de perte (G"), qui indique l'hystérèse et dont une valeur augmentée représente une hystérèse augmentée et dont une performance diminuée. Pour plus de lisibilité les résultats seront indiqués en performance base 100, la valeur 100 étant attribuée au témoin. Un résultat inférieur à 100 indiquant une performance diminuée, et inversement, un résultat supérieur à 100, indiquera une performance améliorée.

Essais

Des compositions de flanc externe, contenant des élastomères usuels, des charges renforçantes et des additifs non conformes à l'invention (C1 et C2 tableau 2) ont été préparées selon les méthodes connues de l'homme de l'art et similairement à la préparation des compositions de l'invention décrite plus haut. Ces compositions témoins ont été comparées à des compositions (C3 et C4 du tableau 2) conformes à l'invention.

Le tableau 2 présente l'ensemble des compositions préparées. Les taux sont tous exprimés en pce.

Tableau 2

| Compositions | C1 | C2 | C3 | C4 |
|---|---|---|---|---|
| Caoutchouc naturel (NR) (1) | 35 | 0 | 0 | 0 |
| Polybutadiène (BR) (2) | 65 | 75 | 75 | 75 |
| SBS (3) | 0 | 25 | 25 | 25 |
| Noir de carbone (4) | 50 | 25 | 25 | 25 |
| Cire (5) | 1 | 1 | 1 | 1 |
| Résine (6) | 0 | 0 | 10 | 15 |
| Huile (7) | 20 | 15 | 5 | 0 |
| Antioxydants (8) | 3 | 3 | 3 | 3 |
| Acide stéarique | 1 | 1 | 1 | 1 |
| Oxyde de zinc | 3 | 2,5 | 2,5 | 2,5 |
| Soufre | 1,4 | 1,2 | 1,2 | 1,2 |

(suite)

| Compositions | C1 | C2 | C3 | C4 |
|---|---|---|---|---|
| Accélérateur (9) | 1,4 | 1,2 | 1,2 | 1,2 |

| Références du tableau 2: |
|---|
| (1) NR caoutchouc naturel |
| (2) Butadiene Rubber Nd |
| (3) Copolymère bloc SBS « D1101 » de la société Kraton |
| (4) Noir de carbone N550 |
| (5) Cire anti-ozone « VARAZON 4959 » de la société Sasol Wax |
| (6) Résine C5 « Escorez 1102 » de la société Exxon (0% H aromatique, 3% H éthylénique, Tg = 53°C, Mn = 900 g/mol, Ip = 2,6) |
| (7) Huile MES de la société Exxon Mobil |
| (8) Antioxydants: « Santoflex 6PPD » de la société Solutia et « vulkanox IPPD» de la société Bayer |
| (9) N-cyclohexyl-2-benzothiazyl-sulfenamide « Santocure CBS » de la société Solutia. |

Les compositions ont été testées selon les tests décrits précédemment de performance en résistance à l'ozone, rigidité (G*) et hystérèse (G").

Le tableau 3 présente l'ensemble des résultats des compositions testées.

Tableau 3

| Compositions | C1 | C2 | C3 | C4 |
|---|---|---|---|---|
| Extension maximale après 240h ozone | 50% | 100% | Pas de rupture | Pas de rupture |
| G" MAX retour à 23°C | 100% | 169% | 108% | 100% |
| G* à 10% de def à 23°C | 100% | 100% | 100% | 109% |

Les résultats présentés au tableau 3 montrent que seules les compositions C3 et C4, conformes à l'invention permettent d'éviter la rupture des échantillons soumis à une attaque ozone et présentent donc une très bonne résistance à l'ozone. Les compositions présentent aussi un équilibre des performances de rigidité et d'hystérèse amélioré.

**Revendications**

1. Pneumatique pourvu d'un flanc externe, ledit flanc externe comprenant une composition à base d'au moins un élastomère thermoplastique comprenant au moins un bloc élastomère et au moins un bloc thermoplastique, un élastomère butadiénique, 10 à 100 pce de noir de carbone, 5 à 25 pce de résine hydrocarbonée majoritairement composée d'unités issues de monomères C5, et un système de réticulation.

2. Pneumatique selon la revendication 1, dans lequel l'élastomère thermoplastique comprend un bloc élastomère insaturé choisi dans le groupe constitué par les polyisoprènes, les polybutadiènes, les copolymères de styrène et de butadiène, et les mélanges de ces élastomères, ces élastomères étant non hydrogénés ou partiellement hydrogénés.

3. Pneumatique selon l'une quelconque des revendications précédentes, dans lequel l'élastomère thermoplastique comprend un bloc thermoplastique choisi dans le groupe constitué par les polyoléfines, les polyuréthanes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et les mélanges de ces polymères.

4. Pneumatique selon l'une quelconque des revendications précédentes, dans lequel l'élastomère thermoplastique est choisi dans le groupe constitué par les copolymères à blocs styrène/butadiène/styrène (SBS), styrène/isoprène/styrène (SIS), styrène/copolymère butadiène-styrène éventuellement partiellement hydrogéné/styrène (SOE), et les mélanges de ces copolymères.

5. Pneumatique selon l'une quelconque des revendications précédentes dans lequel le taux d'élastomère thermoplastique est compris dans un domaine allant de 5 à 45 pce, plus préférentiellement de 10 à 40 pce, plus préférentiellement encore de 15 à 35 pce.

6. Pneumatique selon l'une quelconque des revendications précédentes dans lequel le taux d'élastomère butadiénique est compris dans un domaine allant de 55 à 95 pce, de préférence de 60 à 90 pce, plus préférentiellement encore de 65 à 85 pce.

7. Pneumatique selon l'une quelconque des revendications précédentes, dans lequel l'élastomère butadiénique est choisi dans le groupe constitué par les polybutadiènes, les copolymères butadiène-styrène et leurs mélanges.

8. Pneumatique selon l'une quelconque des revendications précédentes, dans lequel l'élastomère butadiénique est choisi dans le groupe constitué par les polybutadiènes et leurs mélanges.

9. Pneumatique selon l'une quelconque des revendications précédentes dans lequel la quantité totale de noir de carbone est comprise dans un domaine allant de 20 à 60 pce, de préférence de 25 à 55 pce.

10. Pneumatique selon l'une quelconque des revendications précédentes dans lequel la résine hydrocarbonée présente un taux de protons aromatique inférieur à 20%, de préférence inférieur à 15%.

11. Pneumatique selon l'une quelconque des revendications précédentes dans lequel la résine hydrocarbonée présente un taux de protons éthylénique inférieur à 15%, de préférence inférieur à 7%.

12. Pneumatique selon l'une quelconque des revendications précédentes dans lequel la résine hydrocarbonée présente une température de transition vitreuse comprise dans un domaine allant de 30 à 80°C, de préférence de 40 à 60°C.

13. Pneumatique selon l'une quelconque des revendications précédentes dans lequel la résine hydrocarbonée présente une masse moléculaire moyenne en nombre comprise dans un domaine allant de 500 à 3000 g/mol, de préférence de 700 à 2000 g/mol.

14. Pneumatique selon l'une quelconque des revendications précédentes dans lequel la quantité de résine hydrocarbonée est comprise dans un domaine allant de 7 à 25 pce, de préférence de 9 à 25 pce, plus préférentiellement de 9 à 20 pce, mieux, de 9 à 18 pce.

15. Pneumatique selon l'une quelconque des revendications précédentes dans lequel la composition comprend en outre une cire anti-ozone, dans une quantité comprise dans un domaine allant de 0,2 à 10 pce, plus préférentiellement de 0,5 à 5 pce.

**Patentansprüche**

1. Reifen mit einer äußeren Seitenwand, wobei die äußere Seitenwand eine Zusammensetzung auf Basis von mindestens einem thermoplastischen Elastomer, das mindestens einen elastomeren Block und mindestens einen thermoplastischen Block umfasst, einem Butadien-Elastomer, 10 bis 100 phe Ruß, 5 bis 25 phe Kohlenwasserstoffharz, das hauptsächlich aus Einheiten, die sich von C5-Monomeren ableiten, besteht, und einem Vernetzungssystem umfasst.

2. Reifen nach Anspruch 1, wobei das thermoplastische Elastomer einen ungesättigten elastomeren Block umfasst, der aus der Gruppe bestehend aus Polyisoprenen, Polybutadienen, Copolymeren von Styrol und Butadien und Mischungen dieser Elastomere ausgewählt ist, wobei diese Elastomere nicht hydriert oder teilweise hydriert sind.

3. Reifen nach einem der vorangehenden Ansprüche, wobei das thermoplastische Elastomer einen thermoplastischen Block umfasst, der aus der Gruppe bestehend aus Polyolefinen, Polyurethanen, Polyamiden, Polyestern, Polyacetalen, Polyethern, Polyphenylensulfiden, Polyfluorverbindungen, Polystyrol, Polycarbonaten, Polysulfonen, Polymethylmethacrylat, Polyetherimid, thermoplastischen Copolymeren und Mischungen dieser Polymere ausgewählt ist.

4. Reifen nach einem der vorhergehenden Ansprüche, wobei das thermoplastische Elastomer aus der Gruppe bestehend aus Styrol/Butadien/Styrol(SBS)-, Styrol/Isopren/Styrol(SIS)-, Styrol/gegebenenfalls teilweise hydriertem Butadien-StyrolCopolymer/Styrol(SOE)-Blockcopolymeren und Mischungen dieser Copolymere ausgewählt ist.

**5.** Reifen nach einem der vorhergehenden Ansprüche, wobei der Gehalt an thermoplastischem Elastomer in einem Bereich von 5 bis 45 phe, weiter bevorzugt von 10 bis 40 phe, noch weiter bevorzugt von 15 bis 35 phe, liegt.

**6.** Reifen nach einem der vorhergehenden Ansprüche, wobei der Gehalt an Butadien-Elastomer in einem Bereich von 55 bis 95 phe, bevorzugt von 60 bis 90 phe, noch weiter bevorzugt von 65 bis 85 phe, liegt.

**7.** Reifen nach einem der vorhergehenden Ansprüche, wobei das Butadien-Elastomer aus der Gruppe bestehend aus Polybutadienen, Butadien-Styrol-Copolymeren und Mischungen davon ausgewählt ist.

**8.** Reifen nach einem der vorhergehenden Ansprüche, wobei das Butadien-Elastomer aus der Gruppe bestehend aus Polybutadienen und Mischungen davon ausgewählt ist.

**9.** Reifen nach einem der vorhergehenden Ansprüche, wobei die Gesamtmenge an Ruß in einem Bereich von 20 bis 60 phe, bevorzugt von 25 bis 55 phe, liegt.

**10.** Reifen nach einem der vorhergehenden Ansprüche, wobei das Kohlenwasserstoffharz einen Gehalt an aromatischen Protonen von weniger als 20 %, bevorzugt weniger als 15 %, aufweist.

**11.** Reifen nach einem der vorhergehenden Ansprüche, wobei das Kohlenwasserstoffharz einen Gehalt an ethylenischen Protonen von weniger als 15 %, bevorzugt weniger als 7 %, aufweist.

**12.** Reifen nach einem der vorhergehenden Ansprüche, wobei das Kohlenwasserstoffharz eine Glasübergangstemperatur in einem Bereich von 30 bis 80 °C, bevorzugt von 40 bis 60 °C, aufweist.

**13.** Reifen nach einem der vorhergehenden Ansprüche, wobei das Kohlenwasserstoffharz ein zahlenmittleres Molekulargewicht in einem Bereich von 500 bis 3000 g/mol, bevorzugt von 700 bis 2000 g/mol, aufweist.

**14.** Reifen nach einem der vorhergehenden Ansprüche, wobei die Menge an Kohlenwasserstoffharz in einem Bereich von 7 bis 25 phe, bevorzugt von 9 bis 25 phe, weiter bevorzugt von 9 bis 20 phe, noch besser von 9 bis 18 phe, liegt.

**15.** Reifen nach einem der vorhergehenden Ansprüche, bei dem die Zusammensetzung außerdem ein Antiozonwachs in einer Menge in einem Bereich von 0,2 bis 10 phe, weiter bevorzugt von 0,5 bis 5 phe, umfasst.

## Claims

**1.** Tyre provided with an external sidewall, said external sidewall comprising a composition based on at least one thermoplastic elastomer comprising at least one elastomer block and at least one thermoplastic block, a butadiene elastomer, from 10 to 100 phr of carbon black, from 5 to 25 phr of hydrocarbon resin predominantly composed of units resulting from C5 monomers, and a crosslinking system.

**2.** Tyre according to Claim 1, in which the thermoplastic elastomer comprises an unsaturated elastomer block selected from the group consisting of polyisoprenes, polybutadienes, copolymers of styrene and of butadiene, and mixtures of these elastomers, these elastomers being non-hydrogenated or partially hydrogenated.

**3.** Tyre according to either one of the preceding claims, in which the thermoplastic elastomer comprises a thermoplastic block selected from the group consisting of polyolefins, polyurethanes, polyamides, polyesters, polyacetals, polyethers, polyphenylene sulfides, polyfluorinated compounds, polystyrenes, polycarbonates, polysulfones, poly(methyl methacrylate), polyetherimide, thermoplastic copolymers, and mixtures of these polymers.

**4.** Tyre according to any one of the preceding claims, in which the thermoplastic elastomer is selected from the group consisting of styrene/butadiene/styrene (SBS), styrene/isoprene/styrene (SIS) and styrene/optionally partially hydrogenated butadiene-styrene copolymer/styrene (SOE) block copolymers, and mixtures of these copolymers.

**5.** Tyre according to any one of the preceding claims, in which the content of thermoplastic elastomer is within a range extending from 5 to 45 phr, more preferentially from 10 to 40 phr, more preferentially still from 15 to 35 phr.

**6.** Tyre according to any one of the preceding claims, in which the content of butadiene elastomer is within a range extending from 55 to 95 phr, preferably from 60 to 90 phr, more preferentially still from 65 to 85 phr.

7.  Tyre according to any one of the preceding claims, in which the butadiene elastomer is selected from the group consisting of polybutadienes, butadiene/styrene copolymers and their mixtures.

8.  Tyre according to any one of the preceding claims, in which the butadiene elastomer is selected from the group consisting of polybutadienes and their mixtures.

9.  Tyre according to any one of the preceding claims, in which the total amount of carbon black is within a range extending from 20 to 60 phr, preferably from 25 to 55 phr.

10.  Tyre according to any one of the preceding claims, in which the hydrocarbon resin exhibits an aromatic proton content of less than 20%, preferably of less than 15%.

11.  Tyre according to any one of the preceding claims, in which the hydrocarbon resin exhibits an ethylenic proton content of less than 15%, preferably of less than 7%.

12.  Tyre according to any one of the preceding claims, in which the hydrocarbon resin exhibits a glass transition temperature within a range extending from 30°C to 80°C, preferably from 40°C to 60°C.

13.  Tyre according to any one of the preceding claims, in which the hydrocarbon resin exhibits a number-average molecular weight within a range extending from 500 to 3000 g/mol, preferably from 700 to 2000 g/mol.

14.  Tyre according to any one of the preceding claims, in which the amount of hydrocarbon resin is within a range extending from 7 to 25 phr, preferably from 9 to 25 phr, more preferentially from 9 to 20 phr, better still from 9 to 18 phr.

15.  Tyre according to any one of the preceding claims, in which the composition additionally comprises an anti-ozone wax, in an amount within a range extending from 0.2 to 10 phr, more preferentially from 0.5 to 5 phr.

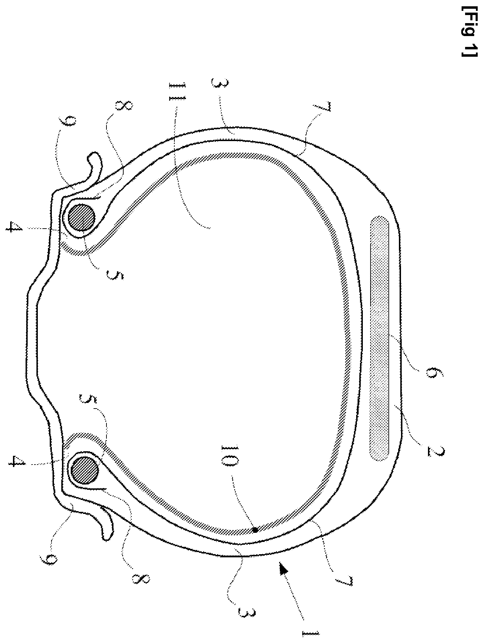

[Fig 1]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1097966 A
- EP 1462479 B1
- EP 1975200 A1
- EP 1033265 B1
- EP 1357149 A2
- EP 1231080 A1
- US 4824900 A
- WO 2018100079 A
- WO 9736724 A
- WO 9916600 A
- WO 2006069792 A
- WO 2006069793 A
- WO 0316837 A
- WO 02088238 A

**Littérature non-brevet citée dans la description**

- **R. MILDENBERG** ; **M. ZANDER** ; **G. COLLIN**. Hydrocarbon Resins. VCH